# FASCICULE DE BREVET EUROPEEN

(11) **EP 1 090 216 B1**
(45) Date de publication et mention de la délivrance du brevet: **06.11.2002**
(21) Numéro de dépôt: 99923686.2
(22) Date de dépôt: 08.06.1999
(51) Int. Cl.: F02B 47/08, F02M 25/07

(54) **MOTEUR A COMBUSTION INTERNE A DEUX TEMPS MUNI D'UN DISPOSITIF DE SURALIMENTATION ET DE RECIRCULATION PARTIELLE DE GAZ D'ECHAPPEMENT**
AUFGELADENE ZWEITAKTBRENNKRAFTMASCHINE MIT TEILABGASRÜCKFÜHRUNG
TWO-STROKE INTERNAL COMBUSTION ENGINE PROVIDED WITH A SUPERCHARGING DEVICE AND EXHAUST GAS PARTIAL RECYCLING

(30) Priorité: 22.06.1998 FR 9807835
(43) Date de publication de la demande: 11.04.2001
(73) Titulaire: Drecq, Daniel, 78610 Saint Léger en Yvelines (FR)
(72) Inventeur: Drecq, Daniel, 78610 Saint Léger en Yvelines (FR)
(74) Mandataire: Abello, Michel
(86) Numéro de dépôt international: FR9901341
(87) Numéro de publication internationale: WO99067516

(56) Documents cités:
- WO-A-99/13205
- FR-A- 2 080 086
- US-A- 5 657 630
- US-A- 5 746 163
- PATENT ABSTRACTS OF JAPAN vol. 018, no. 563 (M-1693), 27 octobre 1994 (1994-10-27) & JP 06 200832 A (ISUZU MOTORS LTD), 19 juillet 1994 (1994-07-19)
- PATENT ABSTRACTS OF JAPAN vol. 014, no. 060 (M-0931), 5 février 1990 (1990-02-05) & JP 01 285651 A (TOYOTA MOTOR CORP), 16 novembre 1989 (1989-11-16)
- PATENT ABSTRACTS OF JAPAN vol. 18, no. 660 (M-1722), 14 décembre 1994 (1994-12-14) & JP 06 257520 A (HASHIMOTO NOBORU), 13 septembre 1994 (1994-09-13)

## Description

Dans la demande de brevet n° 97-11294 du 11 septembre 1997, on a décrit un moteur à combustion interne comportant au moins une branche de collecteur d'échappement reliant au moins deux cylindres, cette branche de collecteur d'échappement comportant une soupape pilotée et étant reliée à la tubulure de sortie des gaz d'échappement par l'intermédiaire d'un boisseau tournant.

Cette disposition peut fonctionner avec tout type de moteur à combustion qu'il soit à deux ou à quatre temps.

Le document JP A 062 00832 décrit un moteur du type défini au préambule de la revendication 1.

Le document US A 5 746 163 concerne un moteur diesel à deux temps suralimenté au moyen d'une soufflante conventionnelle.

La présente invention concerne un dispositif plus. simple, donc moins onéreux, destiné à un moteur deux temps du type "uniflow".

Elle concerne un moteur défini dans la revendication 1.

A titre d'exemples non limitatifs, afin de faciliter la compréhension de l'invention, on a représenté aux dessins annexés :
- figure 1 (1a - 1g) : une vue schématique d'un premier mode de réalisation de l'invention, les pièces étant représentées dans sept positions successives ;
- figure 2 (2a - 2h) : une vue schématique d'un deuxième mode de réalisation de l'invention, les pièces étant représentées dans huit positions successives ;
- figure 3 (3a - 3h) : une vue schématique d'un troisième mode de réalisation de l'invention, les pièces étant représentées dans huit positions successives ;
- figure 4 (4a - 4h) : une vue schématique d'un quatrième mode de réalisation de l'invention, les pièces étant représentées dans huit positions successives ;
- figure 5 : une vue en perspective, à échelle agrandie, d'un exemple de réalisation du moyen d'obturation du mode de réalisation de la figure 3 ;
- figures 6 à 9 : quatre diagrammes illustrant la fonction du moteur pour les figures 1 à 4.

Dans toutes ces figures, les mêmes éléments portent les mêmes références.

Le moteur à combustlon interne representé est un moteur deux temps qui comporte un cylindre 1, dans lequel se déplace un piston 2, attelée par une bielle 3, au maneton 4 d'un vilebrequin 5. Le cylindre 1 est muni, à sa partie supérieure d'une ou plusieurs soupapes d'échappement 6. L'admission est réalisée par une pluralité de lumières 7 pratiquées à la base du cylindre 1, alimentées par une couronne 8 elle-même reliée à une soufflante 9.

Un volume additionnel 10, qui peut avoir toute forme appropriée, communique avec le haut et le bas du cylindre 1 à travers deux obturateurs rotatifs 11, 12 et/ou 21.

L'obturateur rotatif 11 est par exemple un boisseau tournant à deux voies relié aux canalisations 13, 14, 15 et 16. La canalisation 13 provient du cylindre 1 en aval de la (ou des) soupape (s) d'échappement 6 ; la canalisation 14 aboutit au volume additionnel 10 ; les canalisations 15 et 16 aboutissent au collecteur d'échappement, non représenté.

L'obturateur rotatif 12 est par exemple un boisseau tournant à plusieurs voies, relié aux canalisations 17, 18 et 19. La canalisation 17 aboutit au volume 10 ; la canalisation 18 aboutit à la couronne d'admission 8 ; la canalisation 19 aboutit dans le cylindre 1 au voisinage de sa partie basse.

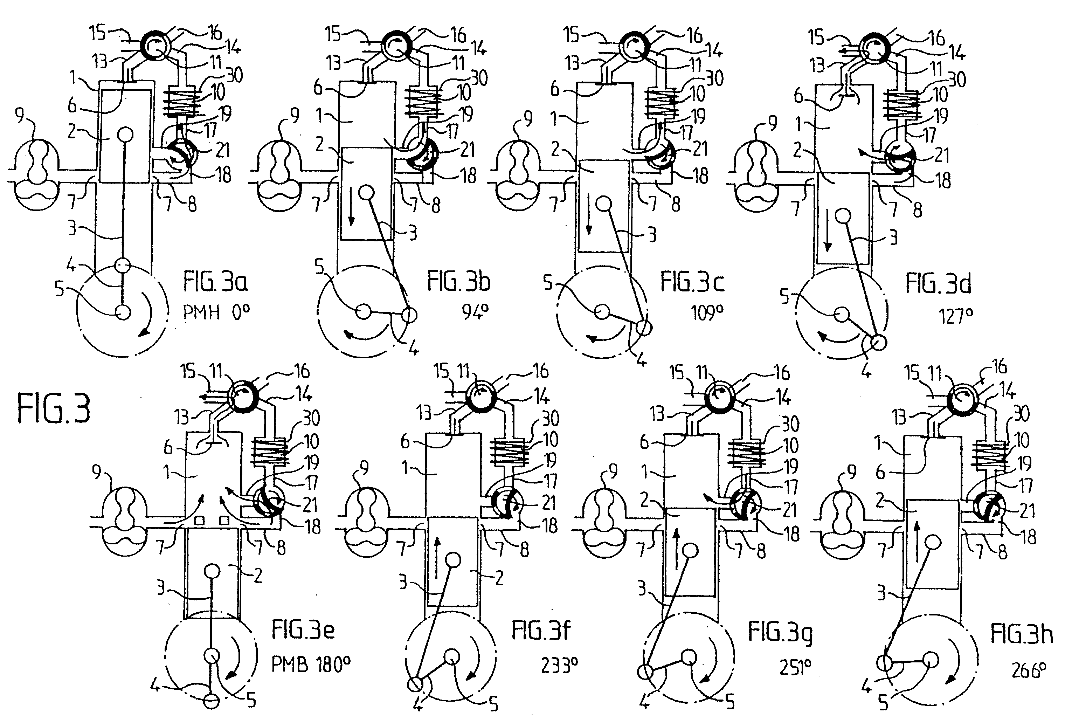

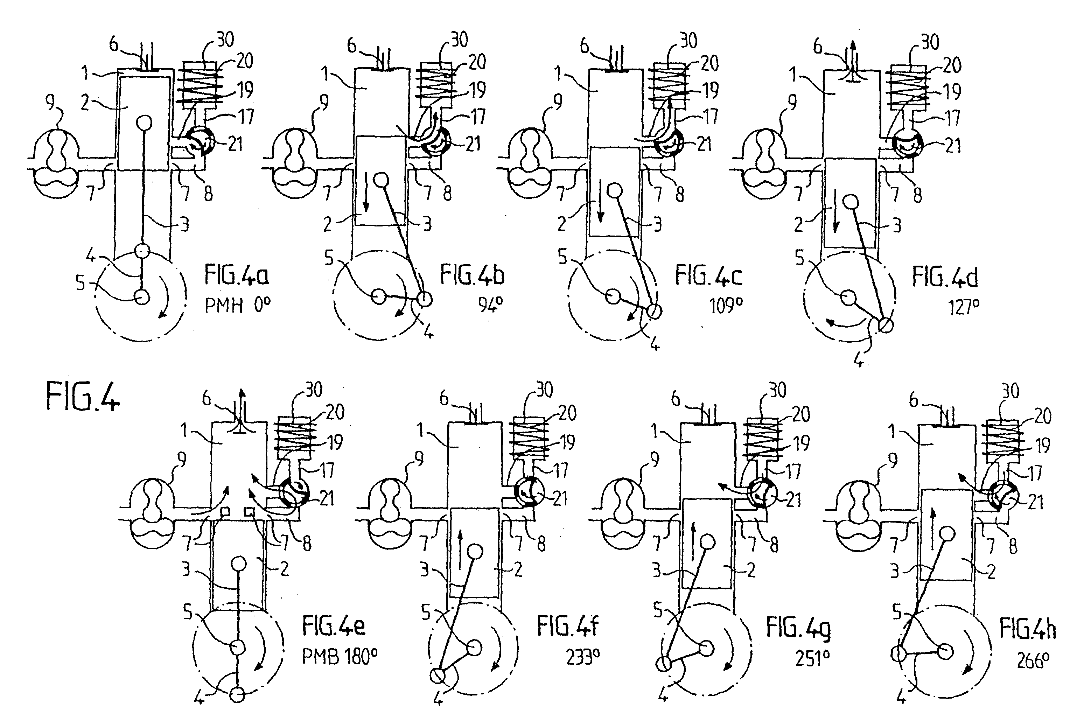

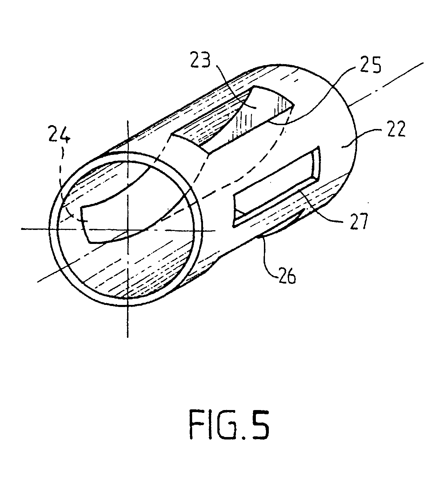

L'obturateur rotatif 21 est représenté de façon détaillée à la figure 5 : il est constitué par un boisseau creux 22 muni de quatre lumières 23, 24, 26 et 27, deux de ces fenêtres 23 et 24 étant reliées l'une à l'autre par un conduit 25 disposé à l'intérieur du boisseau 22 de sorte que cet obturateur 21 permet la communication soit des fenêtres 23 et 24 par le conduit 25 soit des fenêtres 26 et 27 par l'intérieur du boisseau 22. Lorsqu'un tel obturateur rotatif 21 est employé (figures 3 et 4), le volume du boisseau 22 s'additionne au volume de la canalisation 19 pour définir la quantité d'air frais qui est stockée.

Les mouvements rotatifs des obturateurs rotatifs 11, 12 et 21 sont liés de toute façon appropriée, connue de l'homme du métier et donc non décrite, au mouvement rotatif du vilebrequin 5, en rapport 1/1 ou différent de 1/1, phasé ou déphasable par rapport au mouvement du vilebrequin 5.

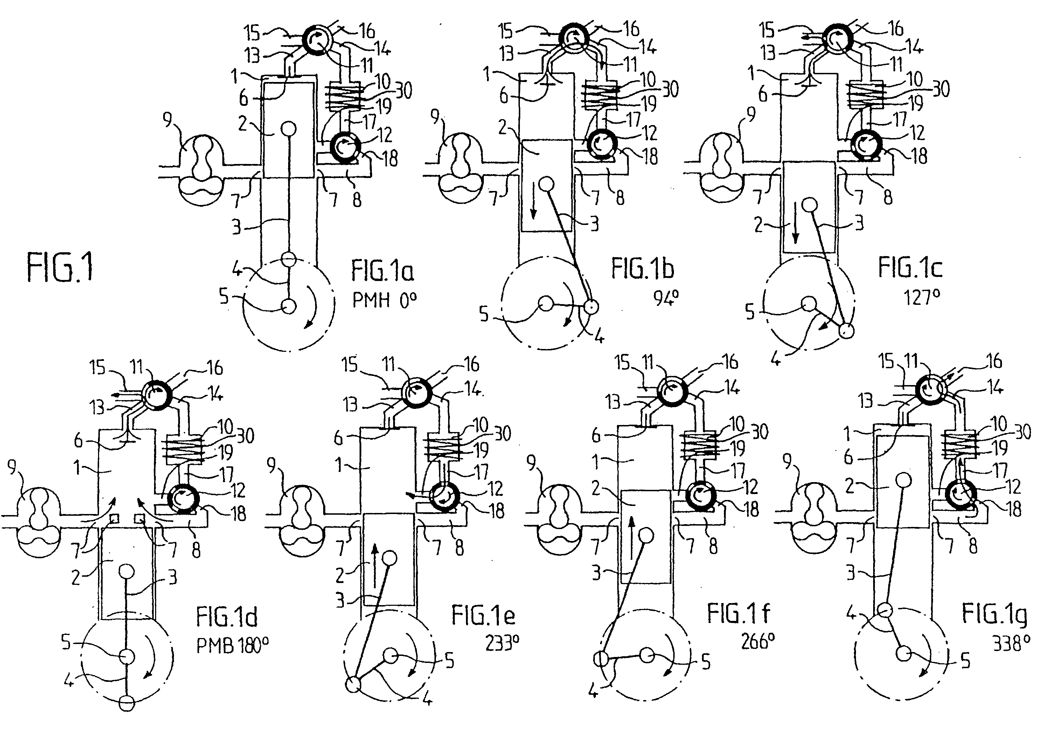

Le fonctionnement du dispositif est décrit ci-après en relation avec les figures 1a à 1g.

A la figure 1a le cylindre 1 est à son point mort haut (PMH), considéré comme position d'origine à 0° ; à la figure 1b, le cylindre 1 a entamé sa course de descente correspondant à la phase de détente, le maneton 4 ayant décrit un angle de 94° par exemple ; à la figure 1c, le cylindre continue son mouvement de descente, le maneton 4 ayant décrit un angle de 127° ; à la figure 1d, le cylindre 1 est à son point mort bas (PMB), en fin de phase d'admission, les lumières 7 ayant été découvertes et le cylindre 1 rempli d'air par la soufflante 9, le maneton 4 ayant décrit un angle de 180° ; à la figure 1e, le cylindre 1 a commencé sa course de compression, les lumières 7 étant occultées, le maneton 4 ayant décrit un angle de 233° ; à la figure 1f le cylindre 1 poursuit sa course ascendante de compression, le maneton 4 ayant décrit un angle de 266° ; à la figure 1g, le cylindre 1 arrive à proximité de son PMH, le maneton 4 ayant décrit un angle de 338°.

A la figure 1a, la ou les soupapes 6 sont fermées ainsi que les obturateurs 11 et 12.

A la figure 1b, la ou les soupapes 6 s'ouvrent et l'obturateur 11, qui a pivoté, par exemple dans le même sens que le vilebrequin 5, fait communiquer les canalisations 13 et 14. L'obturateur 12 à également tourné de la même quantité et dans le même sens ; mais cela n'a amené aucune mise en communication de canalisations : la canalisation 17 provenant du volume 10 est fermée. Il en résulte qu'une bouffée de gaz brûlés sous pression est refoulée dans lesdites canalisations 13 et 14, ce qui comprime l'air se trouvant dans le volume 10 tout y introduisant une portion de gaz brûlés, correspondant à la période angulaire de transfert.

A la figure 1c, la ou les soupapes 6 sont toujours ouvertes ; l'obturateur 11 ayant tourné a mis en communication les canalisations 13 et 15 tout en fermant la canalisation 14 ; l'obturateur 12 a également tourné mais sans réaliser de mise en communication. Il en résulte que le mélange air/gaz brûlés, qui a été introduit précédemment sous pression (environ 3,5 bars à pleine charge) dans le volume 10 y est piégé et que les gaz brûlés s'échappent par la canalisation 15 vers le collecteur d'échappement.

A la figure 1d, la ou les soupapes d'échappement 6 sont toujours ouvertes ; l'obturateur 11, bien qu'ayant continué à tourner, maintient la communication entre les canalisations 13 et 15 ; l'obturateur 12 a également tourné, mais sans réaliser de mise en communication; les lumières 7 sont démasquées. Il en résulte que l'air en provenance de la soufflante 9 exécute un balayage qui évacue les gaz brûlés par la canalisation 15, le cylindre 1 se remplit d'air à la pression, assez basse, de la soufflante (1,2 bars environ) et le mélange air/gaz brûlés est toujours piégé sous pression (3,5 bars environ) dans le volume 10.

A la figure 1e, la ou les soupapes 6 sont fermées ; l'obturateur 11 a continué à tourner, les canalisations 13 et 15 communiquent encore mais cela est sans effet puisque la soupape est fermée ; le cylindre 1 est venu occulter les fenêtres 7 ; mais l'obturateur 12 est venu mettre en communication les canalisations 17 et 19. Il en résulte que le mélange d'air et de gaz brûlés, qui était piégé sous pression dans le volume 10 s'échappe et remplit, sous pression, le cylindre 1. Cela réalise à la fois une suralimentation du cylindre et une recirculation partielle de gaz brûlés, opération connue sous le nom de EGR (Exhaust gas recirculation), et qui a pour effet de diminuer les émissions d'oxydes d'azote à bas régime.

A la figure 1f, la ou les soupapes 6 sont fermées ainsi que les obturateurs 11 et 12 ; de sorte que la phase de compression se poursuit.

A la figure 1g la ou les soupapes 6 sont fermées ; l'obturateur 11 est venu mettre en communication les canalisations 14 et 16 ; l'obturateur 12 est venu mettre en communication les canalisations 17 et 18. Il en résulte que l'air frais, propulsé par la soufflante 9 dans la couronne d'admission 8 emprunte les canalisations 18 puis 17 pour pénétrer dans le volume 10 et que le mélange résiduel d'air et de gaz brûlés se trouvant dans ledit volume 10 est évacué par les canalisations 14 puis 16.

Lorsque le piston atteint le PMH, le cycle est prêt à recommencer.

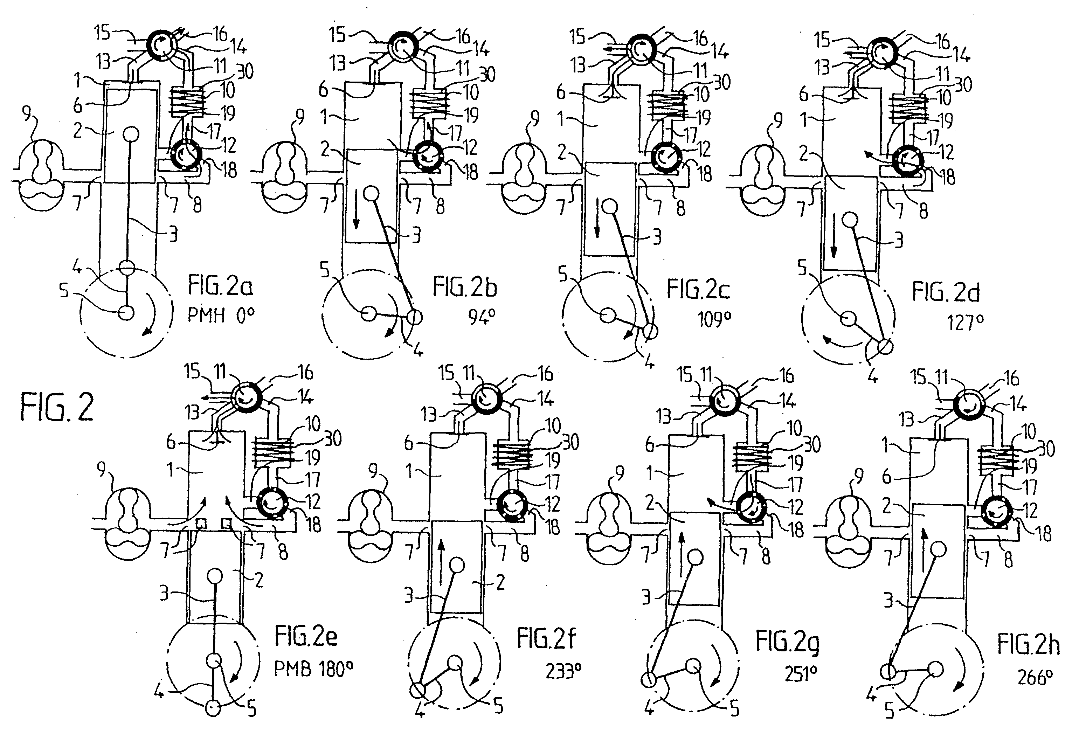

Les figures 2 à 4 représentent trois variantes de réalisation dans lesquelles les mêmes éléments que ceux de la figure 1 portent les mêmes références.

La seule différence entre les dispositifs des figures 2 et 3 provient de ce que les obturateurs rotatifs 11, 12 et 21 réalisent des communications différentes de sorte que les circulations ne sont-pas les mêmes.

Ce qui change, c'est que dans le cas des figures 2 et 3, le volume 10 est rempli et vidé par sa partie basse à travers l'obturateur 12 ou 21 ; alors que, dans l'exemple précédent, il était rempli par sa partie haute, en passant par l'obturateur 11 et vidé par sa partie basse en passant par l'obturateur 12.

A la figure 2a, le piston 2 étant à son PMH, l'obturateur rotatif 12 fait communiquer les canalisations 17 et 18 ; tandis que l'obturateur rotatif 11 fait communiquer les canalisations 14 et 16. Il en résulte que le volume 10 est balayé par de l'air frais en provenance de la soufflante 9 qui passe par la couronne 8, la canalisation 18, puis la canalisation 17, le reliquat de mélange d'air et de gaz brûlés se trouvant dans le volume10 étant évacué par les canalisations 14 et 16.

On voit à la figure 2b, le maneton 4 ayant décrit un angle de 94° (ce qui correspond à la figure 1b), que la ou les soupapes 6 ne sont pas encore ouvertes mais que le piston 2 démasque l'ouverture de la canalisation 19. Les gaz en combustion se trouvant sous pression dans le cylindre 1, s'échappent alors par la canalisation 19, à travers l'obturateur 12 vers la canalisation 17 jusque dans le volume 10. La canalisation 14 étant fermée, les gaz brûlés compriment l'air qui se trouve dans le volume 10 et y pénètrent partiellement.

A la figure 2c, le maneton 4 ayant décrit un angle de 109°, l'obturateur 12 a tourné de façon à obturer la canalisation 17 (ainsi que la canalisation 19). Le mélange sous pression d'air et de gaz brûlés qui se trouvait dans le volume 10 y est ainsi piégé. La ou les soupapes 6 peuvent alors s'ouvrir pour permettre l'échappement, l'obturateur 11 ayant mis en communication les canalisations 13 et 15.

A la figure 2d, le maneton 4 ayant décrit un angle de 127° (ce qui correspond à la figure 1c), l'obturateur 11 assure toujours la communication entre les canalisations 13 et 15 ; tandis que l'obturateur 12 établit la communication entre les canalisations 18 et 19. Il en résulte que l'air frais, propulsé par la soufflante 9, passe par la canalisation 18, traverse l'obturateur 12, arrive par la canalisation 19 dans le cylindre 1 et commence, le balayage dudit cylindre, les gaz brûlés étant repoussés au travers de la soupape 6.

A la figure 2e, qui correspond à la figure 1d, le maneton 4 ayant décrit un angle de 180°, le cylindre 1 est à son PMB. Le balayage se continue et le cylindre est rempli d'air frais à la basse pression délivrée par la soufflante (environ 1,2 bars).

A la figure 2f, qui correspond à la figure 1c, le maneton 4 ayant décrit un angle de 233°, la phase de compression commence ; mais le mélange air et gaz brûlés qui est piégé dans le volume 10 n'est pas encore introduit dans le cylindre, comme c'était le cas précédemment.

A la figure 2g, le maneton 4 a décrit un angle de 251°. Dans cette position, l'obturateur 12 établit la communication entre les canalisations 17 et 19. Il en résulte que le mélange air et gaz brûlés qui est piégé dans le volume 10 peut s'échapper par la canalisation 17, traverser l'obturateur 12 et pénétrer dans le cylindre 1 par la canalisation 19. Cela réalise à la fois une suralimentation dans le cylindre 1 et une recirculation partielle des gaz brûlés, opération qui était réalisée à la figure le dans l'exemple précédent.

On obtient donc un fonctionnement analogue à celui décrit en relation avec la figure 1.

Aux figures 1 et 2, le boisseau 12 est équipé uniquement de lumières. Il s'avère que, dans le cas de la figure 2, avec un tel boisseau, il n'est pas possible de dépasser environ 15° de rotation du vilebrequin pour utiliser la bouffée d'échappement, puis d'utiliser la même durée pour récupérer l'air stocké dans le conduit ou volume 10 : cette durée peut être insuffisante pour une bonne efficacité du système.

Il est alors préférable d'utiliser un obturateur tel que celui décrit à la figure 5, c'est-à-dire un obturateur 21 muni d'un boisseau tournant creux 22.

Cette disposition est décrite en relation avec la figure 3. Sur cette figure, l'obturateur tournant 11 est à deux voies, tandis que l'obturateur à lumières 12 de la figure 2 est remplacé par un obturateur tournant 21, qui est celui représenté à la figure 5.

Comme pour les figures 1 et 2, la figure 3 est décomposée en huit figures 3a à 3h illustrant huit positions occupées par les pièces mobiles au cours d'un cycle.

La position 3a correspond à la phase de combustion, toutes les ouvertures du cylindre 1 étant fermées et le piston 2 étant à son point mort haut. Dans cette position, l'obturateur rotatif supérieur 11 fait communiquer les canalisations 14 et 16 ; tandis que l'obturateur rotatif inférieur 21 fait communiquer les canalisations 18 et 17 à travers le boisseau creux 22 dudit obturateur 21. Il en résulte que de l'air en provenance de la soufflante 9 pénètre dans la couronne 8, puis par la canalisation 18, traverse l'obturateur 21, emprunte la canalisation 17, traverse le volume 10 et sort par la canalisation 14, l'obturateur 11 et la canalisation 16. Le volume 10 est ainsi balayé et rempli d'air frais.

En position 3b, le vilebrequin 5 a effectué une rotation de 94°. La phase de détente est en cours, le piston 2 s'abaisse dans le cylindre 1 et commence à découvrir l'orifice par lequel la canalisation 19 débouche dans le cylindre 1. L'obturateur supérieur 11 a fermé la canalisation 14 tandis que l'obturateur inférieur 21 a mis en communication les canalisations 17 et 19 : il s'ensuit qu'une bouffée de gaz brûlés sous pression commence à pénétrer dans le volume 10.

En position 3c, le mouvement de détente se poursuit et la bouffée de gaz de combustion continue à pénétrer sous pression dans le volume 10.

En position 3d, l'obturateur inférieur 21 ferme toute communication entre la canalisation 17 et les canalisations 18 ou 19 ; de sorte que l'air se trouvant dans le volume 10 et les gaz brûlés, qui y ont pénétré, sont piégés sous pression dans ledit volume 10. Cependant, l'architecture interne dudit boisseau 21 fait qu'il met en communication les canalisations 18 et 19. En même temps, l'obturateur supérieur 11 a mis en liaison les canalisations 13 et 15. Comme en cette position 3d, la ou les soupapes 6 sont ouvertes, le cylindre 1 est balayé par de l'air frais en provenance de la soufflante 9, les gaz brûlés étant évacués par la canalisation 15 vers le collecteur d'échappement.

En position 3e, ce balayage continue.

En position 3f, le piston 2 a dépassé son point mort bas et a commencé la phase de compression, les deux obturateurs 11 et 21 étant en position fermée, ainsi que la ou les soupapes 6.

En position 3g, la ou les soupapes 6 sont fermées, l'obturateur 11 est fermé, mais l'obturateur 21 ouvre la communication entre les canalisations 17 et 19, c'est-à-dire entre le volume 10 et le cylindre 1. Le mélange air et gaz, qui était piégé dans le volume 10, peut alors s'échapper et pénétrer dans le cylindre 1.

En position 3h, les deux obturateurs 11 et 21 sont fermés et la phase de compression se poursuit vers le PMH.

La figure 4 illustre un autre mode de mise en oeuvre de l'invention. Dans cette figure, les éléments identiques à ceux des figures 1, 2 et 3 portent les mêmes références. Les figures 4a à 4h correspondent aux mêmes positions du maneton 4 que dans les figures 2a à 2h ainsi que 3a à 3h.

Dans cet exemple de réalisation, il n'y a plus qu'un seul obturateur rotatif 21 qui communique avec un volume additionnel 20, qui est un volume fermé, cet obturateur rotatif 21 étant un obturateur à trois voies.

A la figure 4a, la course de combustion/détente commence.

A la figure 4b, le maneton 4 a décrit un angle de 94°, le piston 2 découvre alors l'orifice par lequel la canalisation 19 débouche dans le cylindre 1. Dans cette position, l'obturateur rotatif 21 établit la communication entre les canalisations 19 et 17, de sorte qu'une bouffée de gaz brûlés sous pression refoule dans le volume 20 l'air de la canalisation 19 et des gaz.

Il en est de même à la figure 4c.

A la figure 4d*,* le maneton 4 ayant tourné de 127°, l'obturateur rotatif 21 a interrompu toute communication de la canalisation 17 avec les autres canalisations 18 et 19 ; de sorte que le mélange sous pression air et gaz brûlés est piégé dans le volume 20. La ou les soupapes 6 s'ouvrent.

A la figure 4e, la ou les soupapes 6 sont ouvertes, les fenêtres 7 ne sont plus occultées par le piston 2. L'air qui va servir ultérieurement à la suralimentation se trouve dans la canalisation 19 et dans le boisseau creux 22 de l'obturateur rotatif : on pourra donc déterminer à volonté les dimensions respectives dudit boisseau 22 et de la canalisation 19 pour stocker le volume d'air désiré. L'air pulsé par la soufflante 9 réalise le balayage du cylindre, ce qui évacue les gaz brûlés par la ou les soupapes 6 et emplit le cylindre d'air frais.

A la figure 4f, la position de l'obturateur rotatif 21 est telle que l'air frais en provenance de la soufflante 9, qui a été introduit précédemment dans le boisseau creux dudit obturateur, s'y trouve piégé.

A la figure 4g, la position de l'obturateur rotatif 21 est telle que la canalisation 17 communique avec la canalisation 19. Il en résulte que le mélange sous pression, piégé dans le volume 20, post remplit le cylindre 1 en refoulant l'air frais qui a auparavant été piégé dans le boisseau de l'obturateur rotatif 21 ainsi que l'air frais contenu dans la canalisation 19.

A la figure 4h, l'ouverture par laquelle la canalisation 19 communique avec le cylindre 1 est obturée.

On obtient ainsi simultanément une suralimentation en air frais et une introduction de gaz brûlés.

La figure 5 représente le boisseau tournant 22 de l'obturateur tournant 21. Il comporte quatre fenêtres 23, 24, 26 et 27, deux de ces fenêtres 23 et 24 étant reliées par un conduit 25 de sorte que les deux canalisations 23 et 24 ne peuvent communiquer qu'entre elles et jamais avec les deux autres.

A noter que, comme cela est représenté, il est possible de refroidir, par tout moyen approprié 30, le volume 10 ou 20, ce qui permet d'augmenter la densité du mélange air et gaz piégé dans ledit volume additionnel et améliore le rendement du moteur.

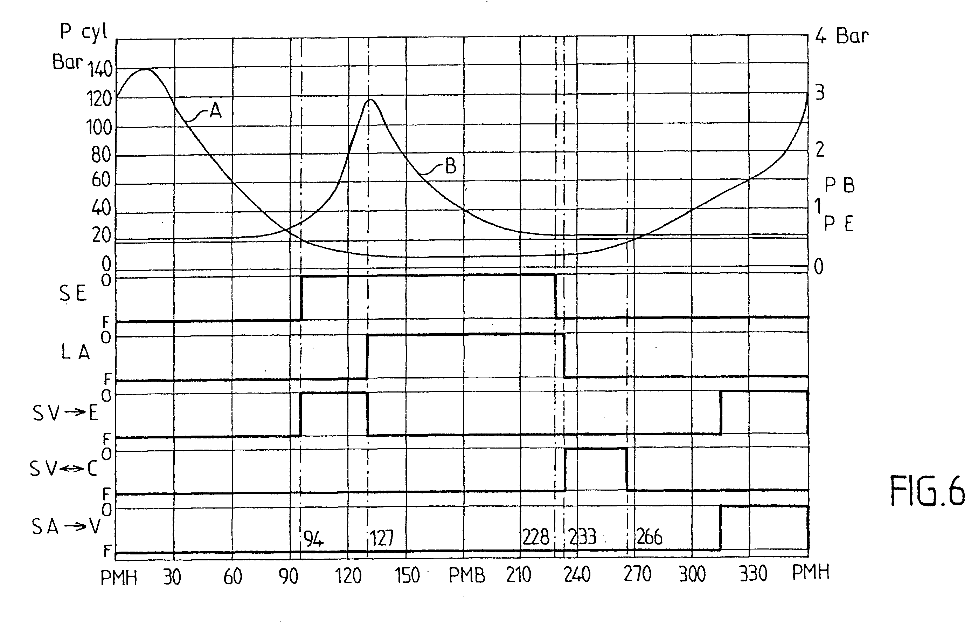

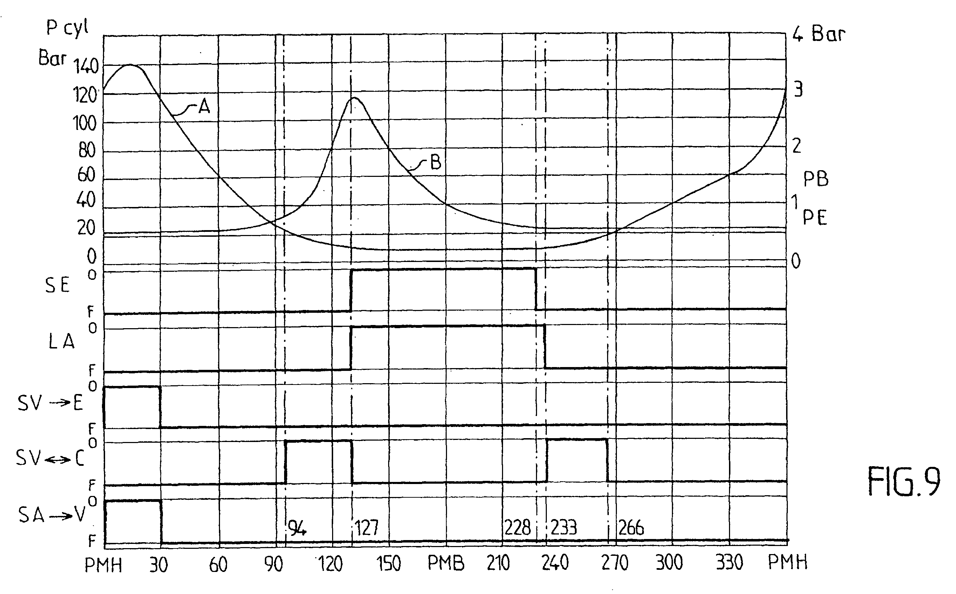

Les figures 6 et 9 sont des diagrammes qui correspondent respectivement aux figures 1 à 4.

La figure 6 illustre le fonctionnement de l'exemple de réalisation de la figure 3. La courbe A est la courbe des pressions dans le cylindre ; la courbe B est la courbe des pressions d'échappement ; SE signifie Soupape d'Echappement ; LA signifie Lumières d'Admission ; le signe V<-> E désigne les transferts, dans un sens ou dans l'autre entre le volume 10 et l'échappement ; le signe V <-> C désigne les transferts entre le volume 10 et le cylindre ; le signe A -> V désigne le transfert de l'admission vers le volume 10.

On voit en particulier que la soupape d'échappement est ouverte entre 94° et 288° de rotation du vilebrequin 5 ; que les lumières d'admission sont découvertes par le piston 2 entre 127° et 233° ; que entre 94° et 127° ainsi que entre 315° et 360°, il y a communication entre le volume 10 et l'échappement (sur la figure 1c, on voit que cette communication va de l'échappement vers le volume 10 ; et sur la figure 1h, on voit que cette communication va du volume vers l'échappement) ; que entre 233° et 266°, il y a communication entre le volume 10 et le cylindre 1 (ce qui correspond à la figure 1g) ; et que entre 315° et 360°, il y a communication entre l'admission (lumières 7, collecteur 8) et le volume 10 (par la canalisation 18, à travers l'obturateur 11 et la canalisation 17 ; ce qui correspond à la figure 1g).

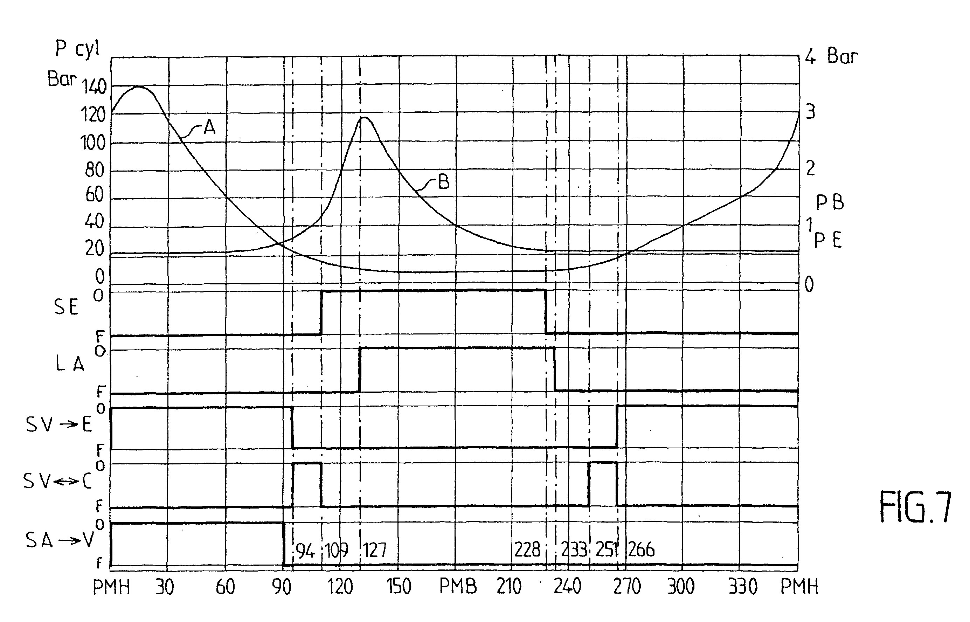

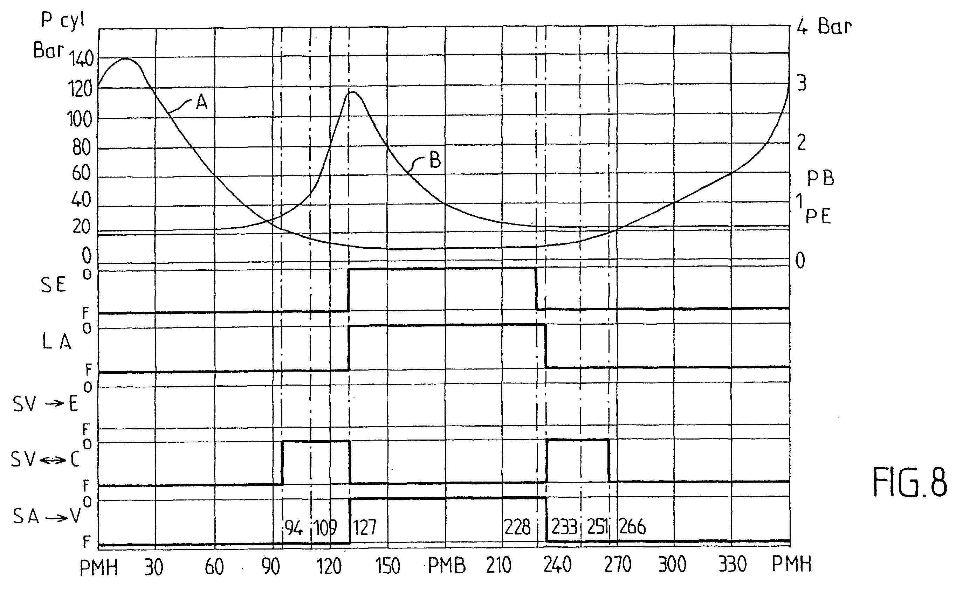

De façon analogue, la figure 7 correspond au fonctionnement du mode de réalisation de la figure 2 ; la figure 8 à la figure 3 et la figure 9 à la figure 4.

## Revendications

1. Moteur deux temps du type comportant un cylindre (1), dans lequel se déplace un piston (2), des dispositifs d'échappement (6) et d'admission (7), et un volume additionnel (10, 20) communiquant avec le cylindre (1) à travers des moyens d'obturation et d'ouverture (11, 12, 21), **caractérisé par le fait que** les mouvements desdits moyens d'obturation et d'ouverture (11, 12, 21) sont commandés de façon synchrone ou déphasable avec ceux du piston (2) dans le cylindre (1) de façon que, lors de la phase de combustion/détente, les gaz brûlés compriment l'air ou le mélange d'air et de gaz brûlés se trouvant dans le volume additionnel (10, 20) en y pénétrant au moins partiellement ; que ce mélange d'air et de gaz brûlés y soit piégé sous pression ; puis que ce mélange soit admis dans le cylindre (1) lors de la phase d'admission ; ledit moteur comportant une soufflante (9) pour envoyer dans le cylindre (1) un flux d'air de balayage, ledit volume additionnel (10, 20) communiquant aussi à travers lesdits moyens d'obturation et d'ouverture (11, 12, 21) avec ladite soufflante (9), lesdits moyens d'obturation et d'ouverture (11, 12, 21) étant aptes à permettre le refoulement d'air provenant de ladite soufflante (9) dans ledit volume additionnel (10, 20).

2. Moteur selon la revendication 1, **caractérisé par le fait que**, après que le mélange, préalablement piégé dans le volume additionnel (10, 20) ait été admis dans le cylindre (1), ledit volume additionnel est à nouveau rempli d'air frais en provenance de la soufflante (9).

3. Moteur selon la revendication 2, **caractérisé par le fait qu'**il comporte deux obturateurs rotatifs (11, 12, 21), l'un (11) étant associé à la ou aux soupapes d'échappement (6) par une canalisation (13) ; l'autre (12, 21) étant associé à la couronne d'admission (8) alimentant les fenêtres d'admission (7) par une canalisation (18).

4. Moteur selon la revendication 3, dans lequel le volume additionnel (10) est disposé entre les deux obturateurs rotatifs (11, 12, 21) auquel il est relié par des canalisations (14, 17).

5. Moteur selon la revendication 4, **caractérisé par le fait que** les obturateurs rotatifs (11, 12) sont agencés de manière telle que l'obturateur rotatif supérieur (11) associé à la ou aux soupapes d'échappement (6), situées au sommet du cylindre (1), mette celle-ci en communication avec une extrémité du volume additionnel (10) au cours de la phase de combustion/détente puis interrompe cette communication un peu avant le point mort bas du piston (2) ; tandis que l'obturateur rotatif (12) inférieur associé à la couronne d'admission (8) assure la communication du volume additionnel (10) avec le cylindre (1) par une canalisation (19) disposée au voisinage du bas du cylindre (1); de telle sorte que le volume additionnel (10) soit mis sous pression par une extrémité au moyen de gaz brûlés en provenance de la ou des soupapes d'échappement (6) puis soit vidé en direction du cylindre (1) par son autre extrémité.

6. Moteur selon la revendication 5, **caractérisé par le fait que** les obturateurs rotatifs (11, 12 ou 21) sont agencés de manière telle que l'obturateur rotatif inférieur (12, 21) assure à la fois la communication du volume additionnel (10) avec le cylindre (1) par une canalisation (19) disposée au voisinage du bras du cylindre (1) et la communication avec le volume additionnel (10) par une canalisation (17) ; de telle sorte que le volume additionnel (10) soit rempli d'air en provenance de la soufflante (9), puis reçoive la bouffée de gaz de combustion, puis refoule le mélange air et/ou gaz qui y a été piégé, en passant à travers ledit obturateur rotatif inférieur (12, 21).

7. Moteur selon la revendication 6, dans lequel l'obturateur rotatif inférieur est à quatre voies.

8. Moteur selon la revendication 6, dans lequel l'obturateur rotatif inférieur (21) est à deux voies.

9. Moteur selon la revendication 7 ou 8, **caractérisé par le fait que** les obturateurs rotatifs (11, 12) sont agencés de manière telle que se produisent les opérations suivantes : dans un premier temps, lorsque le piston (2) est à son PMH, balayage du volume additionnel (10) traversé par un flux d'air en provenance de la soufflante (9) ; dans un deuxième temps, à partir d'environ la moitié de la course de détente du piston (2), d'une part, communication entre le cylindre (1) et le volume additionnel (10) à travers l'obturateur rotatif (12) et, d'autre part, communication entre la ou les soupapes d'échappement (6) et le collecteur d'échappement à travers l'obturateur rotatif (11), ce qui remplit le volume additionnel (10) d'un mélange air et/ou gaz brûlés sous pression ; dans un troisième temps, piégeage du mélange air et/ou gaz brûlés dans le volume additionnel (10) ; dans un quatrième temps, balayage du cylindre (1) avec de l'air provenant de la soufflante (9) ; et dans un cinquième temps, au début de la course de compression, admission dans le cylindre (1) du mélange sous pression piégé dans le volume additionnel (10).

10. Moteur selon la revendication 1, **caractérisé par le fait que** le volume additionnel (20) est un volume fermé qui est associé à un seul obturateur rotatif (21), lequel a des dimensions suffisamment importantes pour pouvoir constituer une réserve d'air frais qui sera ensuite propulsé par les gaz piégés dans le volume additionnel (20).

11. Moteur selon la revendication 10, **caractérisé par le fait que** l'obturateur rotatif (21) est agencé de telle sorte que, dans un premier temps, à environ moitié de la course de détente du piston (2), il fasse communiquer le cylindre (1) avec le volume (20), ce qui comprime l'air ou le mélange d'air et de gaz brûlés se trouvant dans le conduit entre ces derniers avec addition d'une portion de gaz brûlés dans le volume (20) ; puis dans un deuxième temps, il fasse communiquer l'air provenant de la soufflante (9) avec le cylindre (1) en traversant l'obturateur rotatif (21), ce qui remplit d'air le boisseau (22) de ce dernier ; puis dans un troisième temps, il enferme l'air frais contenu dans le boisseau (22) ; et dans un quatrième temps, au début de la course de compression du piston (2), il fasse communiquer le cylindre (1) avec le volume (20) de sorte que le mélange air et gaz brûlés qui s'y trouvait piégé soit refoulé dans le cylindre (1) en propulsant l'air préalablement emprisonné dans le boisseau (22) de l'obturateur rotatif (21).

12. Moteur selon l'une quelconque des revendications précédentes, **caractérisé par le fait que** le volume additionnel (10, 20) est refroidi par tout moyen approprié.

## Claims

1. Two-stroke engine of the type comprising a cylinder (1) in which a piston (2) moves, exhaust (6) and inlet (7) devices, and an additional volume (10, 20) communicating with the cylinder (1) through closure and opening means (11, 12, 21), **characterized in that** the movements of the said closure and opening means (11, 12, 21) are controlled in synchronism or out of phase with those of the piston (2) in the cylinder (1) so that, during the combustion/expansion phase, the burnt gases compress the air or the mixture of air and of burnt gases that lie in the additional volume (10, 20), by at least partially entering it; that this mixture of air and of burnt gases is trapped under pressure therein; then that this mixture is let into the cylinder (1) during the inlet phase; the said engine comprising a blower (9) for sending a stream of scavenging air into the cylinder (1), the said additional volume (10, 20) also communicating via the said closure and opening means (11, 12, 21) with the said blower (9), the said closure and opening means (11, 12, 21) being able to allow air from the said blower (9) to be delivered into the said additional volume (10, 20).

2. Engine according to Claim 1, **characterized in that**, after the mixture previously trapped in the additional volume (10, 20) has been let into the cylinder (1), the said additional volume is once again filled with fresh air from the blower (9).

3. Engine according to Claim 2, **characterized in that** it comprises two rotary spool valves (11, 12, 21), one of them (11) associated with the exhaust valve or valves (6) via a duct (13) and the other (12, 21) associated with the inlet ring (8) supplying the inlet ports (7) via a duct (18).

4. Engine according to Claim 3, in which the additional volume (10) is arranged between the two rotary spool valves (11, 12, 21) to which it is connected by ducts (14, 17).

5. Engine according to Claim 4, **characterized in that** the rotary spool valves (11, 12) are arranged in such a way that the upper rotary spool valve (11) associated with the exhaust valve or valves (6) situated at the top of the cylinder (1) places the top of this cylinder in communication with one end of the additional volume (10) during the combustion/expansion phase, then interrupts this communication shortly before the piston (2) reaches bottom dead centre; while the lower rotary spool valve (12) associated with the inlet ring (8) provides the communication between the additional volume (10) and the cylinder (1) via a duct (19) arranged near the bottom of the cylinder (1) so that the additional volume (10) is pressurized from one end with burnt gases from the exhaust valve or valves (6) and is then emptied towards the cylinder (1) via its other end.

6. Engine according to Claim 5, **characterized in that** the rotary spool valves (11, 12 or 21) are arranged in such a way that the lower rotary spool valve (12, 21) provides both communication of the additional volume (10) with the cylinder (1), via a duct (19) arranged near the bottom of the cylinder (1) and communication with the additional volume (10) via a duct (17) so that the additional volume (10) is filled with air from the blower (9), then receives the blast of combustion gas, then delivers the mixture of air and/or gas trapped therein, by passing through the said lower rotary spool valve (12, 21).

7. Engine according to Claim 6, in which the lower rotary spool valve is a four-way spool.

8. Engine according to Claim 6, in which the lower rotary spool valve (21) is a two-way spool.

9. Engine according to Claim 7 or 8, **characterized in that** the rotary spool valves (11, 12) are arranged in such a way that the following operations take place: first of all, when the piston (2) is at top dead centre, the additional volume (10) through which a stream of air from the blower (9) passes is scavenged; secondly, starting about half way through the expansion stroke of the piston (2), there is, on the one hand, communication between the cylinder (1) and the additional volume (10) through the rotary spool valve (12) and, on the other hand, communication between the exhaust valve or valves (6) and the exhaust manifold through the rotary spool valve (11), which fills the additional volume (10) with a mixture of air and/or burnt gases under pressure; thirdly, the mixture of air and/or burnt gases is trapped in the additional volume (10); fourthly, the cylinder (1) is scavenged with the air from the blower (9), and fifthly, at the start of the compression stroke, the pressurized mixture trapped in the additional volume (10) is let into the cylinder (1).

10. Engine according to Claim 1, **characterized in that** the additional volume (20) is a closed volume which is associated with a single rotary spool valve (21), which is large enough to be able to constitute a reserve of fresh air which will then be driven by the gases trapped in the additional volume (20).

11. Engine according to Claim 10, **characterized in that** the rotary spool valve (21) is arranged in such a way that, first of all, approximately half way through the expansion stroke of the piston (2), it causes the cylinder (1) to communicate with the volume (20), and this compresses the air or the mixture of air and burnt gases which lies in the passage between these items with the addition of a portion of burnt gases in the volume (20), secondly, it causes the air from the blower (9) to communicate with the cylinder (1) by passing through the rotary spool valve (21), which fills the spool (22) thereof with air; then thirdly, it encloses the fresh air contained in the spool (22); and fourthly, at the start of the compression stroke of the piston (2), it causes the cylinder (1) to communicate with the volume (20) so that the mixture of air and burnt gases which was trapped therein is delivered into the cylinder (1) propelling the air previously trapped in the spool (22) of the rotary spool valve (21).

12. Engine according to any one of the proceeding claims, **characterized in that** the additional volume (10, 20) is cooled by any appropriate means.

## Patentansprüche

1. Zweitaktmotor vom Typ mit einem Zylinder (1), in dem sich ein Kolben (2) bewegt, einer Auslaß- (6) und einer Ansaugvorrichtung (7) und einem Zusatzvolumen (10, 20), das mit dem Zylinder (1) über Schließ- und Öffnungseinrichtungen (11, 12, 21) verbunden ist, **dadurch gekennzeichnet, daß** die Bewegungen der Schließ- und Öffnungseinrichtungen (11, 12, 21) zu denjenigen des Kolbens (2) im Zylinder (1) synchron oder phasenverschoben derart steuerbar sind, daß die Verbrennungsgase während der Phase der Verbrennung/Entspannung die Luft oder das Gemisch aus Luft und Verbrennungsgasen, das in dem Zusatzvolumen (10, 20) enthalten ist, komprimieren, indem sie wenigstens teilweise in dieses eindringen; daß dieses Gemisch aus Luft und Verbrennungsgasen dort unter Druck aufgefangen ist; daß dieses Gemisch während der Ansaugphase in den Zylinder (1) angesaugt wird; wobei der Motor ein Gebläse (9) aufweist, um in den Zylinder (1) einen Spülluftstrom zu leiten, wobei das Zusatzvolumen (10,20) ferner über die Schließ- und Öffnungseinrichtungen (11, 12, 21) mit dem Gebläse (9) verbunden ist, wobei die Schließ- und Öffnungseinrichtungen (11, 12, 21) das Fördern der von dem Gebläse (9) kommenden Luft in das Zusatzvolumen (10, 20) ermöglichen.

2. Motor nach Anspruch 1, **dadurch gekennzeichnet, daß** nachdem das zuvor in dem Zusatzvolumen (10, 20) gefangene Gemisch in den Zylinder (1) gesaugt wurde, das Zusatzvolumen erneut mit vom Gebläse (9) kommender Frischluft gefüllt wird.

3. Motor nach Anspruch 2, **dadurch gekennzeichnet, daß** er zwei Drehverschlüsse (11, 12, 21) aufweist, von denen der eine (11) mit dem oder den Auslaßventilen (6) durch einen Kanal (13) verbunden ist, während der andere (12, 21) mit dem Ansaugkranz (8) verbunden ist, der die Ansaugöffnungen (7) über einen Kanal (18) speist.

4. Motor nach Anspruch 3, bei dem das Zusatzvolumen (10) zwischen den beiden Drehverschlüssen (11, 12, 21) angeordnet ist, mit denen es durch Kanäle (14, 17) verbunden ist.

5. Motor nach Anspruch 4, **dadurch gekennzeichnet, daß** die Drehverschlüsse (11, 12) derart ausgebildet sind, daß der obere Drehverschluß (11), der dem oder den an der Oberseite des Zylinders (1) befindlichen Auslaßventilen (6) zugeordnet ist, diese/-s im Verlauf der Verbrennungs-/Entspannungsphase mit einem Ende des Zusatzvolumens (10) verbindet und diese Verbindung kurz nach dem unteren Totpunkt des Kolbens (2) unterbricht; während der untere Drehverschluß (12), der dem Ansaugkranz (8) zugeordnet ist, die Verbindung des Zusatzvolumens (10) mit dem Zylinder (1) über einen Kanal (19) gewährleistet, der nahe dem unteren Ende des Zylinders (1) liegt; derart, daß das Zusatzvolumen (10) von einem Ende durch von dem oder den Auslaßventilen (6) kommende Verbrennungsgase mit Druck beaufschlagt und anschließend in Richtung auf den Zylinder (1) über sein anderes Ende entleert wird.

6. Motor nach Anspruch 5, **dadurch gekennzeichnet, daß** die Drehverschlüsse (11, 12 oder 21) derart ausgebildet sind, daß der untere Drehverschluß (12, 21) gleichzeitig die Verbindung des Zusatzvolumens (10) mit dem Zylinder (1) über einen Kanal (19), der nahe dem unteren Ende des Zylinders (1) angeordnet ist, und die Verbindung mit dem Zusatzvolumen (10) über einen Kanal (17) gewährleistet; derart, daß das Zusatzvolumen (10) mit vom Gebläse (9) kommender Frischluft gefüllt wird, anschließend die Verpuffung des Brenngases aufnimmt, und danach das Gemisch aus Luft und/oder Gas, das dort gefangen war, durch den unteren Drehverschluß (12, 21) hindurch fördert.

7. Motor nach Anspruch 6, bei dem der untere Drehverschluß vier Wege aufweist.

8. Motor nach Anspruch 6, bei dem der untere Drehverschluß (21) zwei Wege aufweist.

9. Motor nach Anspruch 7 oder 8, **dadurch gekennzeichnet, daß** die Drehverschlüsse (11, 12) derart ausgebildet sind, daß die folgenden Vorgänge ablaufen: in einem ersten Takt, wenn sich der Kolben (2) an seinem OT befindet, Spülen des Zusatzvolumens (10) durch einen von dem Gebläse (9) kommenden Luftstrom; in einem zweiten Takt, beginnend ungefähr in der Mitte des Entspannungswegs des Kolbens (2), Verbinden des Zylinders (1) und des Zusatzvolumens (10) über den Drehverschluß (12), einerseits, und Verbinden des oder der Auslaßventile (6) und des Abgassammelrohres durch den Drehverschluß (11), wodurch das Zusatzvolumen (10) mit einem druckbeaufschlagten Gemisch aus Luft und/oder Verbrennungsgasen gefüllt wird; in einem dritten Takt, Einfangen des Gemischs aus Luft und/oder Verbrennungsgasen im Zusatzvolumen (10); in einem vierten Takt, Spülen des Zylinders (1) mit vom Gebläse (9) kommender Luft; und in einem fünften Takt zu Beginn des Kompressionswegs, Ansaugen des in dem Zusatzvolumen (10) gehaltenen druckbeaufschlagten Gemischs in den Zylinder (1).

10. Motor nach Anspruch 1, **dadurch gekennzeichnet, daß** das Zusatzvolumen (20) ein geschlossenes Volumen ist, das mit einem einzelnen Drehverschluß (21) verbunden ist, der ausreichend groß bemessen ist, um ein Reservoir von Frischluft zu bilden, die anschließend durch die im Zusatzvolumen (20) gefangenen Gase getrieben wird.

11. Motor nach Anspruch 10, **dadurch gekennzeichnet, daß** der Drehverschluß (21) derart ausgebildet ist, daß in einem ersten Takt, ungefähr in der Mitte des Entspannungswegs des Kolbens (2), der Zylinder (1) mit dem Volumen (20) verbunden wird, wodurch die Luft oder das Gemisch aus Luft und Verbrennungsgasen, die/das sich in der Leitung zwischen Letzteren befindet, unter Zusatz eines Teils der Verbrennungsgase im Volumen (20) komprimiert wird; danach, in einem zweiten Takt, die vom Gebläse (9) kommende Luft mit dem Zylinder(1) durch den Drehverschluß (21) hindurch verbunden wird, wodurch der Hohlraum (22) des Letzteren mit Luft gefüllt wird; danach, in einem dritten Takt, die in dem Hohlraum (22) enthaltene Frischluft eingeschlossen wird; und, in einem vierten Takt, zu Beginn des Kompressionswegs des Kolbens (2), der Zylinder (1) mit dem Volumen (20) derart verbunden wird, daß das Gemisch aus Luft und Verbrennungsgasen, das sich dort eingefangen befindet, in den Zylinder (1) geleitet wird, indem die zuvor im Hohlraum (22) des Drehverschlusses (21) gefangene Luft getrieben wird.

12. Motor nach einem der vorhergehenden Ansprüche, **dadurch gekennzeichnet, daß** das Zusatzvolumen (10, 20) durch jedes geeignete Mittel gekühlt ist.
